# EUROPÄISCHE PATENTSCHRIFT

(11) **EP 2 707 318 B1**
(45) Veröffentlichungstag und Bekanntmachung des Hinweises auf die Patenterteilung: **06.09.2017**
(21) Anmeldenummer: 12718079.2
(22) Anmeldetag: 27.04.2012
(51) Int. Cl.: B65G 49/04

(54) **ANLAGE ZUM BEHANDELN, INSBESONDERE ZUM KATAPHORETISCHEN TAUCHLACKIEREN VON GEGENSTÄNDEN, INSBESONDERE VON FAHRZEUGKAROSSERIEN**
SYSTEM FOR THE TREATMENT OF OBJECTS, IN PARTICULAR THE CATAPHORETIC DIP PAINTING OF OBJECTS, IN PARTICULAR VEHICLE BODIES
INSTALLATION DE TRAITEMENT, EN PARTICULIER DE MISE EN PEINTURE PAR CATAPHORÈSE PAR IMMERSION, D'OBJETS EN PARTICULIER DE CARROSSERIES DE VÉHICULE

(30) Priorität: 12.05.2011 DE 102011101278
(43) Veröffentlichungstag der Anmeldung: 19.03.2014
(73) Patentinhaber: Eisenmann SE, 71032 Böblingen (DE)
(72) Erfinder: SCHNEIDER, Gerd, 71116 Gärtringen (DE); SCHURBA, Alexander, 71065 Sindelfingen (DE)
(74) Vertreter: Ostertag & Partner Patentanwälte mbB
(86) Internationale Anmeldenummer: PCT/EP2012/001810
(87) Internationale Veröffentlichungsnummer: WO 2012/152385

(56) Entgegenhaltungen:
- WO-A1-03/070545
- DE-A1- 10 063 448
- DE-A1- 10 210 941
- DE-A1-102004 024 614
- DE-A1-102006 038 684
- DE-A1-102008 010 400
- DE-A1-102009 051 316
- US-A1- 2005 061 239
- US-A1- 2010 086 384

## Beschreibung

### Anlage zum Behandeln, insbesondere zum kataphoretischen Tauchlackieren von Gegenständen, insbesondere von Fahrzeugkarosserien

Die Erfindung betrifft eine Anlage zum Behandeln, insbesondere zum kataphoretischen Tauchlackieren, von Gegenständen, insbesondere von Fahrzeugkarosserien, mit a) mindestens einem Tauchbecken, in welchem die Gegenstände einer Behandlung unterzogen werden; b) zwei parallelen Schienen; c) mindestens einem Transportwagen, der die Gegenstände durch die Anlage führt, diese dabei in das Tauchbecken ein und aus diesem ausbringt und seinerseits umfasst: ca) ein auf den beiden Schienen verfahrbares Fahrwerk; cb) eine mit dem Fahrwerk verbundene Welle, die sich in einer Arbeitsposition quer zu den beiden Schienen von der einen zu der anderen Schiene erstreckt; cc) mindestens einen mit der Welle drehschlüssig verbundenen Schwenkarm; cd) ein mit dem Schwenkarm verbundenes Halterungsgestell für mindestens einen Gegenstand.

Eine Anlage dieser Art ist aus der DE 102 10 941 A1 bekannt. Hier ist das Fahrwerk des Transportwagens im Wesentlichen symmetrisch zu einer Mittelebene ausgebildet, die in der Mitte zwischen den beiden Schienen verläuft, auf denen das Fahrwerk verfährt. Der Winkel, den die Welle mit den beiden Schienen einschließt, beträgt 90° und lässt sich nicht verändern. Es handelt sich dabei um ein zweispuriges Fahrzeug, das insbesondere für relativ schwere Lasten geeignet ist. Dies ist jedoch mit folgendem Nachteil verbunden: Jeder Transportwagen, der einen Gegenstand durch die Anlage geführt hat, muss nach seiner Entladung wieder in eine Ausgangsposition zurückgebracht werden, in der ein neuer Gegenstand aufgeladen wird. Diese Rückführung der Transportwagen kann im Allgemeinen nicht auf denselben Schienen erfolgen, auf denen der "Hinweg" stattgefunden hat; vielmehr müssen neben den Schienen des "Hinwegs" zwei weitere Schienen vorgesehen werden, auf denen dann der "Rückweg" erfolgt. Diese beiden Schienen nehmen zwangsläufig verhältnismäßig viel Platz in dem Raum ein, in dem sich die Anlage befindet. Platz ist jedoch häufig wenig vorhanden und kostet in jedem Falle Geld.

Eine weitere Anlage der eingangs genannten Art ist aus der US 2010/0863484 A1 bekannt geworden. Dort sind zwei Arme vorgesehen, die an einem Ende eine Verbindungswelle tragen, welche ihrerseits eine Schwenkplattform trägt, an welcher ein Skid mit einer Karosserie befestigt ist. Das andere Ende der Arme ist mit einer rotierbaren Welle verbunden, welche entlang von Trägern bewegbar ist. Dadurch kann die Karosserie in allen möglichen Positionen in ein Bad getaucht werden. Im entladenen Zustand weist die Anordnung in der US2010/086384 A1 eine geringe Höhe auf, so dass der Rücktransport gegebenenfalls unterhalb der Anlage erfolgen kann.

Aus der DE 10 2008 010 400 A1 ist eine Anlage zum Tauchbehandeln von Gegenständen bekannt, bei welcher das Transportsystem nach Art einer Hängebahn ausgebildet ist. Dabei handelt es sich um ein Einschienensystem. Die einzelnen Transportwagen, die auf der einzigen Schiene verfahren, sind mit einer teleskopartigen Befestigungseinrichtung versehen, an deren unterem Ende eine drehbare Welle vorgesehen ist. Die weist frei auskragend von der Schiene weg, an welcher die Transportwagen verfahrbar sind; und trägt ein Halterungsgestell für einen zu behandelnden Gegenstand. Die Befestigungseinrichtung kann mit der Welle und dem Halterungsgestell um eine vertikale Achse verdreht werden, sodass die Transportwagen auf dem Rückweg von der Entladestation zur Beladestation weniger Platz einnehmen. In allen Abschnitten der Anlage sind die Transportwagen jedoch einspurig und daher weniger zur Aufnahme großer Lasten geeignet.

Aufgabe der vorliegenden Erfindung ist es, eine Anlage der eingangs genannten Art derart fortzubilden, dass unter Beibehaltung der Tragfähigkeit der einzelnen Transportwagen insbesondere auf dem Rückweg von der Entladestation zur Beladestation ein geringerer Raumbedarf gegeben ist.

Diese Aufgabe wird durch die Anlage nach Anspruch 1 gelöst. Erfindungsgemäß ist die Welle in einem einer der beiden Schienen benachbarten Endbereich an dem Fahrwerk so verschwenkbar angelenkt, dass sie sich mitsamt dem Schwenkarm und dem Halterungsgestell in eine Raumsparposition verdrehen lässt, in der sie etwa parallel zu einer der beiden Schienen verläuft.

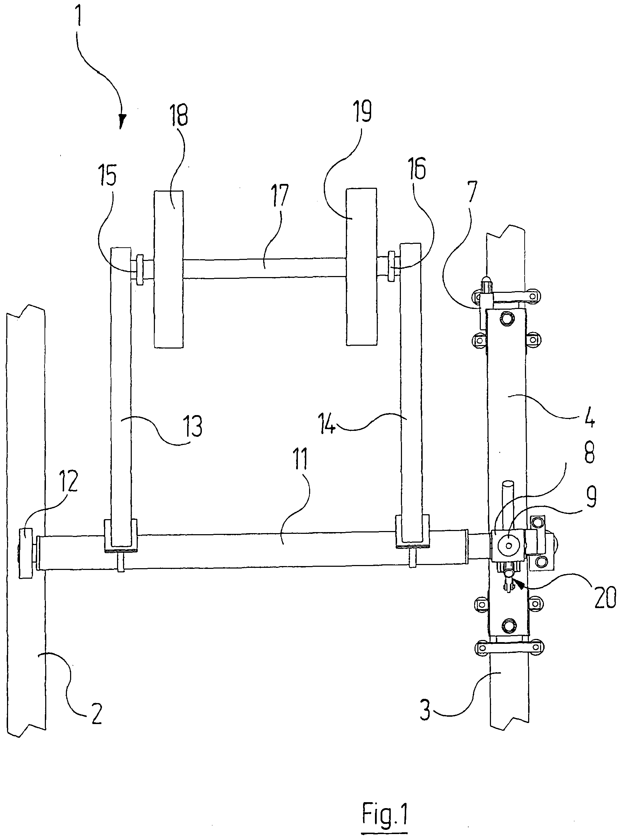

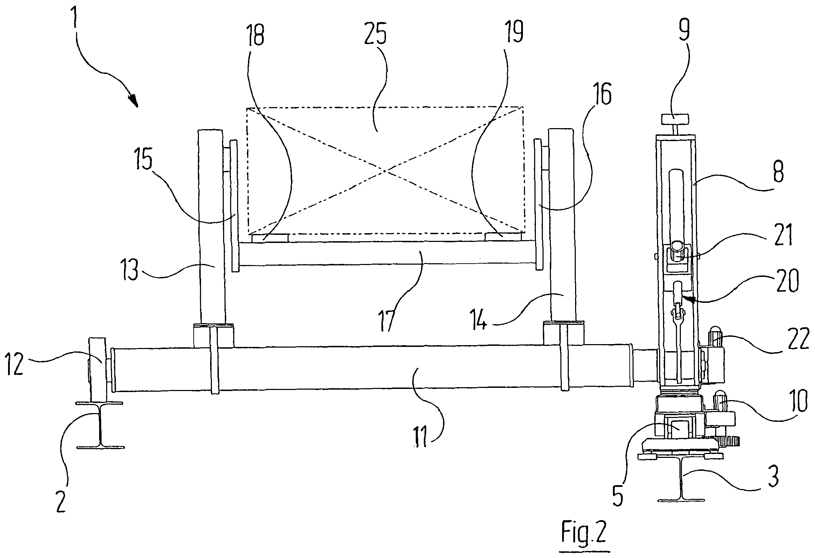

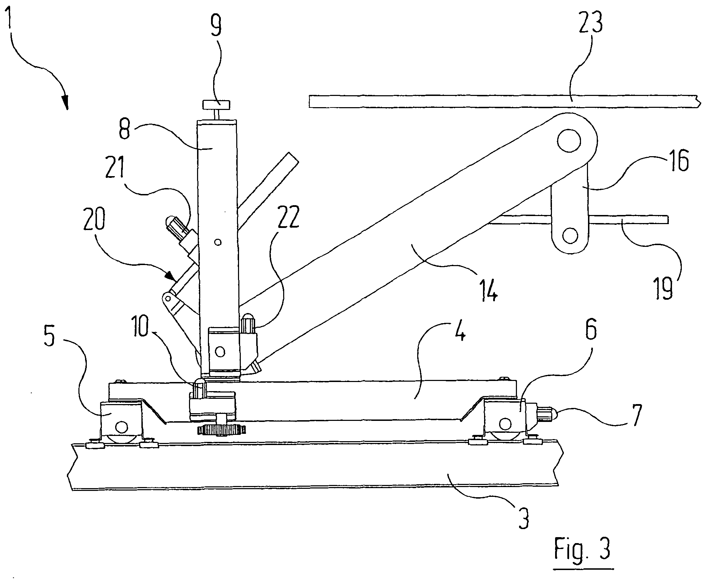

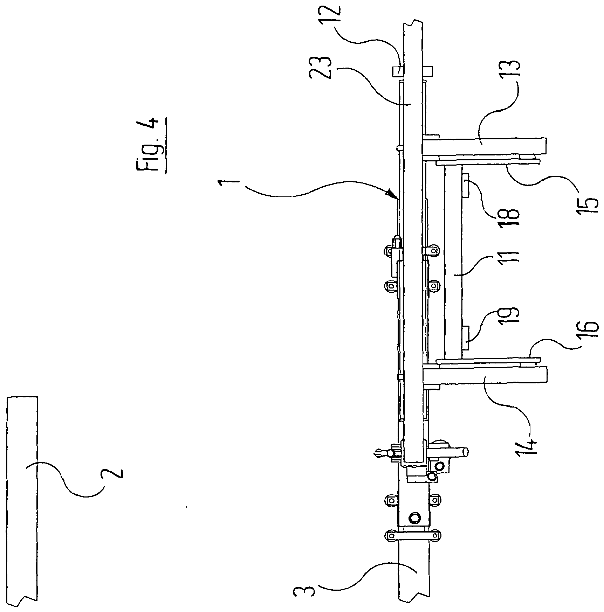

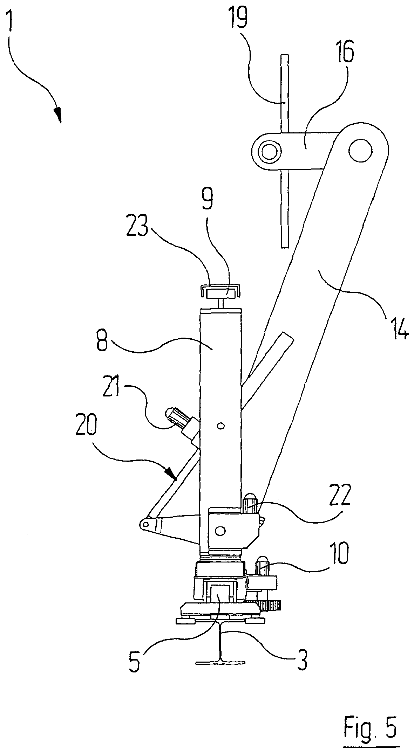

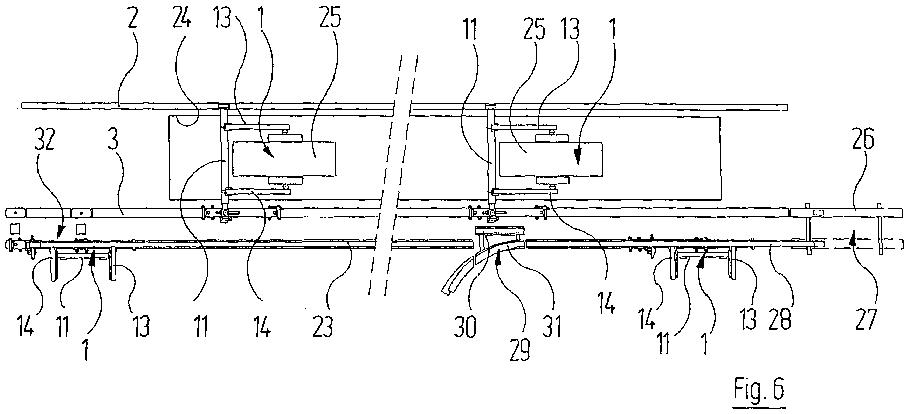

Erfindungsgemäß sind also die Transportwagen so ausgestaltet, dass sie in den Bereichen, in dem sie mit Gegenständen beladen sind und große Tragfähigkeit gefordert ist, als zweispuriges Fahrzeug gestaltet sind, das sich auf zwei Schienen abstützen kann, wodurch auf die Welle keine einseitigen Biegemomente wirken. Dort jedoch, wo die Last von dem Transportwagen abgenommen ist, insbesondere also auf dem Rückweg von der Entladezur Beladestation, lässt sich ein erfindungsgemäßer Transportwagen in ein Einspurfahrzeug umwandeln, welches mit einer einzigen Bodenschiene auskommt, wodurch der Raumbedarf erheblich reduziert wird. Ein weiterer Vorteil des Einspurfahrzeuges ist darin zu sehen, dass dieses kurvengängig ist, was für einen zweispurigen Transportwagen nur sehr eingeschränkt gilt. Zweckmäßigerweise ist an demjenigen Ende der Welle, das von ihrem Anlenkungspunkt entfernt ist, mindestens ein Stützrad gelagert, das in der Arbeitsposition der Welle auf der entsprechenden Schiene abrollen kann. Dieses Stützrad wird im Allgemeinen nicht angetrieben sein, dient also im Wesentlichen ausschließlich dazu, die Gewichtskräfte auf der entsprechenden Seite der Welle in die dort befindliche Schiene einzuleiten. Das Fahrwerk kann eine sich im Wesentlichen senkrecht erstreckende Säule aufweisen, die um eine vertikale Achse verdrehbar ist und mit der die Welle in einem Endbereich verbunden ist. Dabei ist es von besonderem Vorteil, wenn am oberen Ende der Säule eine um eine etwa vertikale Achse verdrehbare Führungsrolle vorgesehen ist und wenn entlang derjenigen Abschnitte der Anlage, in denen der Transportwagen in der Raumsparposition verfahrbar ist, eine Führungsschiene vorgesehen ist, an welcher die Führungsrolle verfahren kann. Auf diese Weise werden im einspurigen Betrieb des Transportwagens Kippmomente aufgefangen. Ein Ausführungsbeispiel der Erfindung wird nachfolgend anhand der Zeichnung näher erläutert; es zeigen Figur 1 die Draufsicht auf einen Transportwagen in Arbeitsstellung; Figur 2 die Ansicht des Transportwagens von Figur in Fahrtrichtung gesehen; Figur 3 die Seitenansicht des Transportwagens der Figuren 1 und 2 ; Figur 4 die Draufsicht auf den Transportwagen der Figuren 1 bis 3 in einer Raumsparposition; Figur 5 die Seitenansicht des Transportwagens der Figur 4 in der Raumsparposition; Figur 6 die Draufsicht auf einen Ausschnitt einer Anlage zur Tauchlackierung von Fahrzeugkarosserien. Zunächst wird auf die Figuren 1 bis 3 Bezug genommen. Diese zeigen einen Transportwagen, der insgesamt mit dem Bezugszeichen 1 gekennzeichnet ist und dessen Arbeitsumgebung, Funktionsweise und Steuerung aus den eingangs genannten Druckschriften, insbesondere aus der DE 100 63 448 A bekannt ist, soweit nachfolgend nichts anderes beschrieben ist. Auf diese Druckschriften wird ergänzend Bezug genommen. Der Transportwagen 1 ist auf zwei parallelen Schienen 2, 3 verfahrbar. Er umfasst einen Längsträger 4 (vgl. insbesondere Figur 3), an dem zwei Laufräder 5, 6 drehbar gelagert sind. Die Laufräder 5, 6 laufen auf der in Figur 1 und 2 rechten Schiene 3 ab. Eines der Laufräder, nämlich dasjenige mit dem Bezugszeichen 6, ist durch einen Motor 7 angetrieben. An dem Längsträger 4 ist eine vertikale Säule 8 befestigt, an deren oberem Ende eine um eine vertikale Drehachse verdrehbare Führungsrolle 9 gelagert ist. Außerdem ist die gesamte Säule 8 selbst mittels eines Antriebsmotors 10 um eine vertikale Achse verdrehbar. An der Säule 8 ist eine Welle 11 befestigt, die gemeinsam mit der Säule 8 um die genannte vertikale Achse verschwenkt werden kann. Am freien Ende der Welle 11 ist ein Stützrad 12 freilaufend angeordnet, welches in der in Figur 1 und 2 dargestellten Position der Welle 11 auf der Schiene 2 abrollen kann.

An der Welle 11 sind außerdem zwei parallele Schwenkarme 13, 14 befestigt. An den von der Welle 11 entfernten Enden der Schwenkarme 13, 14 ist jeweils eine Lasche 15, 16 angelenkt, die an ihrem unteren Ende durch eine Querstrebe 17 miteinander verbunden sind. Die Querstrebe 17 wiederum hält drehschlüssig zwei parallele plattenartige Träger 18, 19, auf denen ein zu behandelnder Gegenstand, insbesondere eine zu lackierende Fahrzeugkarosserie, befestigt werden kann. Die Querstrebe 17 und die Träger 18, 19 können also als Halterungsgestell für den Gegenstand angesehen werden.

Die Welle 11 mit den daran befestigten Schwenkarmen 13 und 14 samt den Laschen 15 und 16 und der Querstrebe 17 mit den Trägern 18, 19 lässt sich um die Achse der Welle 11 mit Hilfe eines Schwenkmechanismus 20 verschwenken, der insbesondere in Figur 3 dargestellt ist und im Einzelnen nicht erläutert zu werden braucht. Es genügt zu wissen, dass mit Hilfe des eines Motors 21, der Teil des Schwenkmechanismus 20 ist, die freien Ende der Schwenkarme 13, 14 und damit die Querstrebe 17 mit den Trägern 18 und 19 sowie der darauf befestigte Gegenstand angehoben bzw. abgesenkt werden können. it Hilfe eines weiteren Motors 22 und eines im Eineinen nicht dargestellten, teilweise durch die Welle 1 und teilweise durch den Schwenkarm 14 verlaufenden Antriebs lassen sich außerdem die Laschen 15, 16 um ihren jeweiligen Anlenkpunkt am oberen Ende der Schwenkarme 15, 16 verdrehen. Auf diese Weise sind für den auf den Trägern 18, 19 befestigten Gegenstand all diejenigen Bewegungen möglich, die bereits in der oben erwähnten DE 102 10 941 A beschrieben sind. Während bei dem Tragwagen, der in dieser Druckschrift beschrieben ist, der Vorlauf durch die Anlage und der Rücklauf in derselben Weise, insbesondere also auf zwei parallelen Schienen geschehen, kann der vorliegend beschriebene Transportwagen 1 bei Bedarf in einer Raumsparposition auf nur einer einzigen Schiene, nämlich der Schiene 3, verfahren werden. Ein solcher Bedarf kann insbesondere dann bestehen, wenn nach dem Durchfahren eines zu behandelnden Gegenstands durch die verschiedenen Behandlungsstationen dieser vom Tragwagen 1 abgenommen wird und der Tragwagen 1 wieder zu seiner Ausgangsposition zurückgeführt werden soll, wo er dann mit einem neuen zu behandelnden Gegenstand beladen wird.

Um aus der Arbeitsposition der Figuren 1 bis 3 in die in den Figuren 4 und 5 dargestellte Raumsparposition zu gelangen, werden zunächst die Schwenkarme 13, 14 weitestmöglich nach oben verschwenkt; die Laschen 15, 16 werden in eine Drehposition gebracht, in welcher die Träger 18, 19 im Wesentlichen senkrecht stehen.

Auf diese Weise hat der Tragwagen 1 die geringstmögliche Ausladung in Richtung senkrecht zur Welle 11, wie dies der Figur 5 zu entnehmen ist. Die Figur 5 zeigt bereits den Zustand nach einem weiteren Schritt beim Einnehmen der Raumsparposition. Dieser Schritt besteht darin, dass die Welle 11 mitsamt den Schwenkarmen 13, 14, den Laschen 15, 16, der Querstrebe 17 und den Trägern 18, 19 um die vertikale Achse der Säule 8 um 90° verdreht wird, so dass also die Welle 11 oberhalb der Schiene 3, parallel zu dieser, zu liegen kommt. Um zu verhindern, dass der Transportwagen 1 in dieser Raumsparposition verkippt, ist in denjenigen Bereichen, in denen der Transportwagen 1 in der Raumsparposition verfahren werden soll, oberhalb der Schiene 3 eine Führungsschiene 23 in Form eines nach unten offenen U-Profiles (vgl. Figur 5) vorgesehen. Diese Führungsschiene 23 ist in geeigneter Weise befestigt, beispielsweise an einem Stahlbau. Sie nimmt in den fraglichen Bereichen der Anlage, in denen der Transportwagen 1 in der Raumsparposition verfahren wird, die Führungsrolle 9 am oberen Ende der Säule 8 auf.

Figur 6 zeigt in der Draufsicht, wie ein Anlagenabschnitt aussehen kann, auf dem ein Transportwagen 1 nach den Figuren 1 bis 5 eingesetzt wird. Erkennbar sind wieder die beiden parallelen Schienen 2, 3, auf denen sich im dargestellten Ausführungsbeispiel zwei Transportwagen 1 in der normalen Arbeitsposition befinden. Die Schienen 2, 3 verlaufen beidseits eines oder mehrerer Tauchbecken 24, in dem bzw. denen eine oder mehrere Behandlungen von den Transportwagen 1 getragener Fahrzeugkarosserien 25 stattfinden. Eine dieser Behandlungen ist im Allgemeinen eine kataphoretische Tauchlackierung.

Es sei angenommen, dass die Transportrichtung der Transportwagen 1 in Figur 6 von links nach rechts verläuft. Die Transportwagen 1 werden daher am in Figur 6 linken Ende der Schiene 2, 3 mit den Fahrzeugkarosserien 25 beladen. Sie verfahren dann in Figur 6 nach rechts bis zum Beginn des ersten Tauchbeckens 24, wo sie die Fahrzeugkarosserie 25 unter Verschwenken der Schwenkarme 13, 14 und gegebenenfalls durch Verschwenken der Laschen 15, 16 nach einer vorgegebenen Kinematik in das Behandlungsmedium eintauchen, das sich in dem ersten Tauchbecken 24 befindet. Die Fahrzeugkarosserien 25 werden sodann bei der Weiterfahrt der Transportwagen 1 in bekannter Weise durch das Tauchbecken 24 und gegebenenfalls weitere Tauchbecken hindurchgeführt. Am in Figur 6 rechten Ende der Schienen 2, 3 sind die Tauchbehandlungen abgeschlossen und die behandelten Fahrzeugkarosserien 25 werden von dem Transportwagen 1 abgenommen. Die nunmehr leeren Transportwagen 1 müssen wieder an den Ausgangspunkt, also an das in Figur 6 linke Ende der Schienen 2, 3 zurückgebracht werden. Hierzu werden sie zunächst in der oben beschriebenen Weise aus der Arbeitsposition der Figuren 1 bis 3 in die Raumsparposition der Figuren 4 und 5 gebracht. Sie fahren sodann auf die Schiene 26 eines insgesamt mit dem Bezugszeichen 27 schematisch angedeuteten Verschiebewagens, wie er an und für sich bekannt ist und daher keine weitere Beschreibung benötigt. Die Schiene 26 des Verschiebewagens 27 wird nunmehr in Fluchtung mit einer Rückführschiene 28 gebracht, die sich im Wesentlichen über die gesamte Länge der Schienen 2, 3, parallel zu diesen, erstreckt.

Oberhalb der Rückführschiene 28 verläuft eine Führungsschiene 23, die, wie oben schon erläutert, mit den Führungsrollen 9 der einzelnen Transportwagen 1 zusammenwirkt. Die

Transportwagen 1 werden nunmehr unter Umkehr der Fahrt< > richtung entlang der Rückführschiene 28 in Figur 6 von rechts nach links verfahren. Sie gelangen dabei in dem Bereich einer Schiebeweiche 29. Diese hat ebenfalls bekannten Aufbau. Sie umfasst ein gerades Schienenstück 30 und ein gekrümmtes Schienenstück 31. Wird das gekrümmte Schienenstück 31 in Fluchtung mit der Rückführschiene 28 gebracht, kann der in Figur 6 nach links fahrende Transportwagen 1 an dieser Stelle aus der Anlage ausgeschleust und beispielsweise einer Reparatur zugeführt werden. Umgekehrt kann ein neuer Transportwagen 1 über das Schienenstück 31 in die Anlage eingebracht werden. Befindet sich das gerade Schienenstück 30 der Schiebeweiche 29 in Fluchtung mit der Rückführschiene 28, können die Transportwagen 1 in Figur 6 weiter nach links bis in den Endbereich der Schienen 2, 3 und 28 verfahren. Dort befindet sich eine Quattroweiche 32, deren Aufbau ebenfalls nicht im Einzelnen erläutert zu werden braucht, da er dem Fachmanne bekannt ist. Mit Hilfe der Quattroweiche 32 werden die hier ankommenden Transportwagen 1 wieder auf die Schiene 3 umgesetzt. Sodann wird die Säule 8 mitsamt der Welle 11, den Schwenkarmen 13, 14, den Laschen 15, 16, der Querstrebe 17 sowie den Trägern 18, 19 wieder um 90° verdreht, so dass die Welle 11 senkrecht zu den Schienen 2, 3 steht und das Stützrad 12 wieder auf der Schiene 2 zu liegen kommt. Sodann kann der Transportwagen 1 wieder mit einer Fahrzeugkarosserie 25 beladen und in der oben schon beschriebenen Weise durch das oder die Tauchbecken 24 geführt werden.

## Patentansprüche

1. Anlage zum Behandeln, insbesondere zum kataphoretischen Tauchlackieren, von Gegenständen, insbesondere von Fahrzeugkarosserien, mit
a) mindestens einem Tauchbecken (24), in welchem die Gegenstände einer Behandlung unterzogen werden;
b) zwei parallelen Schienen (2, 3)
c) mindestens einem Transportwagen (1), der die Gegenstände durch die Anlage führt, diese dabei in das Tauchbecken (24) ein- und aus diesem ausbringt und seinerseits umfasst:
ca) ein auf den beiden Schienen (2, 3) verfahrbares Fahrwerk (4 bis 8);
cb) eine mit dem Fahrwerk (4 bis 8) verbundene Welle (11) die sich in einer Arbeitsposition quer zu den beiden Schienen (2, 3) von der einen zur anderen Schiene (2, 3) erstreckt;
cc) mindestens einen mit der Welle (11) drehschlüssig verbundenen Schwenkarm (13, 14);
cd) ein mit dem Schwenkarm (13, 14) verbundenes Halterungsgestell (17 bis 19) für mindestens einen Gegenstand;
**dadurch gekennzeichnet, dass**
d) die Welle (11) in einem einer (3) der beiden Schienen (2, 3) benachbarten Endbereich an dem Fahrwerk (4 bis 8) so verschwenkbar angelenkt ist, dass sie sich mitsamt dem Schwenkarm (13, 14) und dem Halterungsgestell (17 bis 19) in eine Raumsparposition verdrehen lässt, in der sie etwa parallel zu einer (3) der beiden Schienen (2, 3) verläuft.

2. Anlage nach Anspruch 1, **dadurch gekennzeichnet, dass** an demjenigen Ende der Welle (11), das von dem Anlenkpunkt der Welle am Fahrwerk (4 bis 8) entfernt ist, mindestens ein Stützrad (12) gelagert ist, das in der Arbeitsposition der Welle (11) auf der entsprechenden Schiene (2) abrollen kann.

3. Anlage nach Anspruch 1 oder 2, **dadurch gekennzeichnet, dass**
das Fahrwerk (4 bis 8) eine sich im Wesentlichen senkrecht erstreckende Säule (8) aufweist, die um eine vertikale Achse verdrehbar ist und mit der die Welle (11) in einem Endbereich verbunden ist.

4. Anlage nach Anspruch 3, **dadurch gekennzeichnet, dass**
am oberen Ende der Säule (8) eine um eine etwa vertikale Achse verdrehbare Führungsrolle (9) vorgesehen ist und dass entlang derjenigen Abschnitte der Anlage, in denen der Transportwagen (1) in der Raumsparposition verfahrbar ist, eine Führungsschiene (23) vorgesehen ist, an welcher die Führungsrolle (9) verfahren kann.

## Claims

1. System for the treatment, in particular for the cataphoretic dip-painting, of objects, in particular of vehicle bodies, having
a) at least one dipping tank (24) in which the objects are subjected to a treatment;
b) two parallel rails (2, 3);
c) at least one transportation carriage (1) which guides the objects through the system and thereby conveys said objects into and out of the dipping tank (24), said transportation carriage (1) in turn comprising:
ca) a running gear (4 to 8) which is displaceable on the two rails (2, 3);
cb) a shaft (11) which is connected to the running gear (4 to 8) and which in an operating position extends transversely to the two rails (2, 3) from the one rail to the other rail (2, 3) ;
cc) at least one pivoting arm (13, 14) which is connected to the shaft (11) in a rotationally fixed manner;
cd) a mounting frame (17 to 19) for at least one object, said mounting frame (17 to 19) being connected to the pivoting arm (13, 14);
**characterized in that**
d) the shaft (11) in an end region that is adjacent to one (3) of the two rails (2, 3) is pivotably articulated to the running gear (4 to 8) such that said shaft (11) conjointly with the pivoting arm (13, 14) and the mounting frame (17 to 19) can be rotated to a space-saving position in which said shaft (11) runs approximately parallel with one (3) of the two rails (2, 3).

2. System according to Claim 1, **characterized in that** at least one support wheel (12) which in the operating position of the shaft (11) can roll on the respective rail (2) is mounted on that end of the shaft (11) that is remote from the articulation point of the shaft on the running gear (4 to 8).

3. System according to either of Claims 1 and 2, **characterized in that** the running gear (4 to 8) has a column (8) that extends in a substantially vertical manner and is rotatable about a vertical axis, the shaft (11) being connected to said column (8) in an end region.

4. System according to Claim 3, **characterized in that** a guide roller (9) that is rotatable about an approximately vertical axis is provided at the upper end of the column (8), and **in that** a guide rail (23) on which the guide roller (9) can be displaced is provided along those portions of the system in which the transportation carriage (1) in the space-saving position is displaceable.

## Revendications

1. Installation de traitement, en particulier de peinture par cataphorèse par immersion, d'objets, en particulier de carrosseries de véhicules, avec
a) au moins une cuve d'immersion (24) dans laquelle les objets sont soumis à un traitement ;
b) deux rails parallèles (2, 3) ;
c) au moins un chariot de transport (1) qui conduit les objets à travers l'installation en plongeant ceux-ci dans la cuve d'immersion (24) et en les sortant de celle-ci, et qui comprend lui-même :
ca) un châssis (4 à 8) déplaçable sur les deux rails (2, 3) ;
cb) un arbre (11) relié au châssis (4 à 8) qui, dans sa position de travail, s'étend transversalement aux deux rails (2, 3) d'un rail (2) à l'autre (3) ;
cc) au moins un bras pivotant (13, 14) relié de manière solidaire en rotation à l'arbre (11) ;
cd) une structure de retenue (17 à 19) reliée au bras pivotant (13, 14) pour au moins un objet ;
**caractérisée en ce que**
d) l'arbre (11) est articulé pivotant sur le châssis (4 à 8) dans une zone d'extrémité adjacente à l'un (3) des deux rails (2, 3) de manière à pouvoir être tourné avec le bras pivotant (13, 14) et la structure de retenue (17 à 19) dans une position de faible encombrement dans laquelle il s'étend à peu près parallèlement à l'un (3) des deux rails (2, 3).

2. Installation selon la revendication 1, **caractérisée en ce qu'**à l'extrémité de l'arbre (11) qui est éloignée du point d'articulation de l'arbre sur le châssis (4 à 8) est montée au moins une roue d'appui (12) qui, dans la position de travail de l'arbre (11), peut rouler sur le rail correspondant (2).

3. Installation selon la revendication 1 ou 2, **caractérisée en ce que** le châssis (4 à 8) présente une colonne (8) s'étendant sensiblement verticalement, qui peut tourner autour d'un axe vertical et est reliée à l'arbre (11) dans une zone d'extrémité.

4. Installation selon la revendication 3, **caractérisée en ce qu'**un galet de guidage (9) pouvant tourner autour d'un axe sensiblement vertical est prévu à l'extrémité supérieure de la colonne (8) et que le long des parties de l'installation dans lesquelles le chariot de transport (1) est déplaçable dans la position de faible encombrement, est prévu un rail de guidage (23) sur lequel le galet de guidage (9) peut se déplacer.
